# EUROPÄISCHE PATENTSCHRIFT

(11) **EP 3 561 346 B1**
(45) Veröffentlichungstag und Bekanntmachung des Hinweises auf die Patenterteilung: **08.06.2022**
(21) Anmeldenummer: 18465518.1
(22) Anmeldetag: 24.04.2018
(51) Int. Cl.: F16K 5/06, F16K 11/087, F01P 7/14, F16J 15/10, F16J 15/02, F16K 5/20, F16J 15/06

(54) **DICHTUNG, DICHTUNGSANORDNUNG UND MEHRWEGE-FLUIDVENTIL**
SEAL, SEALING ARRANGEMENT AND MULTIWAY FLUID VALVE
JOINT D'ÉTANCHÉITÉ, DISPOSITIF D'ÉTANCHÉITÉ ET SOUPAPE À VOIES MULTIPLES

(43) Veröffentlichungstag der Anmeldung: 30.10.2019
(73) Patentinhaber: Vitesco Technologies GmbH, 93055 Regensburg (DE)
(72) Erfinder: Popa, Alexandru, 240048 Rimnicu Vilcea (RO); Pop, Marius, 437315 Suciu de Sus (RO); Belin, Cosmin, 300282 Timisoara (RO)
(74) Vertreter: Vitesco Technologies

(56) Entgegenhaltungen:
- CA-A- 616 199
- DE-A1- 10 312 801
- FR-A1- 2 987 094
- US-A- 4 006 882
- US-A- 4 165 859
- US-B1- 6 494 466

## Beschreibung

Die vorliegende Erfindung betrifft ein Mehrwege-Fluidventil, insbesondere ein Mehrwege-Kühlwasserventil, insbesondere eines Fahrzeugs mit einer Dichtung.

Unter einem Fahrzeug ist dabei jede Art von Fahrzeug zu verstehen, welches zum Betrieb mit einem flüssigen und/oder gasförmigen Kraftstoff versorgt werden muss, insbesondere aber Personenkraftwagen und/oder Nutzfahrzeuge. Ferner kann es sich beim Fahrzeug auch um ein teilelektrisches oder vollelektrisches Fahrzeug handeln, insbesondere aber um Personenkraftwagen und/oder Nutzfahrzeuge.

Dichtungen als solche können unterschiedliche Aufgaben haben. Sie können z.B. dem Zweck dienen, ungewollte Fluidverluste zu vermeiden oder zumindest zu begrenzen. Unter einem Fluid kann dabei ein flüssiges und/oder gasförmiges Medium verstanden werden.

Die FR 2 817 541 A1 betrifft eine Drosselklappe mit einem ringförmigen Körper, einem schwenkbaren Flügel und einer ringförmigen elastomeren Dichtung, die in einer Nut einer Innenfläche des Körpers angeordnet ist. Ein Dichtungsabschnitt kommt in einer geschlossenen Position der Drosselklappe mit dem Flügel in Kontakt. Ein anderer Dichtungsabschnitt ist in der Nut angeordnet und bestehend aus zwei flexiblen seitlichen Lippen, die sich einen Aufnahmeraum für Stangen aus flexiblem Material begrenzen. Die Dichtung wird in der Nut gehalten, wenn sich die Stangen in ihrem Aufnahmeraum befinden.

Die CA 616 199 A offenbart ein Mehrwege-Fluidventil gemäß dem Oberbegriff des Anspruchs 1. Der Kolben dieses Ventils ist durch eine ringförmige Dichtung abgedichtet, die einstückig aus einem flexiblen elastischen Materiel hergestellt ist und aus einem ersten ringförmigen Dichtbereich mit kreisförmigem Querschnitt und zwei zweiten ringförmigen Dichtbereichen gleichen Umfangs und Querschnitts, die konzentrisch zu dem ersten Bereich sind und gegenüberliegende Seiten des ersten Bereichs mit axialem und radialem Versatz flankeren, und einem in Umfangsrichtung kontinuierlichen konischen Stegbereich, der die beiden zweiten Dichtbereiche mit dem ersten Bereich verbindet. Aus der DE 103 12 801 A1 ist eine Armatur bekannt, die ein Gehäuse mit einem von einem Strömungsmedium durchströmbaren Innenraum sowie mit einem im Gehäuse insbesondere drehbar angeordneten Ventilkörper enthält, mittels welchem in Abhängigkeit dessen Stellung im Gehäuse der Strömungsweg absperrbar oder freigebbar ist, und ferner zwei an der Außenfläche des Ventilkörpers anliegende erste Dichtelemente, wobei außerhalb des Innenraumes zwischen dem Ventilkörper und dem Gehäuse eine Kammer vorhanden ist.

Aufgabe der vorliegenden Erfindung ist es, ein Mehrwege-Fluidventil mit einer Dichtung bereitzustellen, mit der sich innerhalb des Mehrwege-Fluidventils bedarfsweise voneinander unabhängige Fluidflüsse einstellen lassen. Die Dichtung soll dabei ferner kostengünstig herstellbar sein.

Diese Aufgabe wird durch den Anspruch 1 gelöst, der ein Mehrwege-Fluidventil unter Schutz stellt. Des Weiteren wird eine Verwendung des Mehrwege-Fluidventils als Kühlwasserventil, insbesondere eines Fahrzeugs vorgeschlagen (vgl. Anspruch 11). Vorteilhafte Ausführungsformen der Erfindung sind Gegenstand der Unteransprüche. Aspekte der Erfindung werden nachfolgend dargestellt:
Die Dichtung ist zur Verwendung in einem Fluidventil und zur Unterteilung einer Ventilkammer zwischen zwei benachbarten Anschlüssen des Fluidventils vorgesehen, in welcher ein stellbarer Ventilkörper des Fluidventils angeordnet. Die Ventilkammer wird dabei durch die Dichtung abhängig von einer Stellung des Ventilkörpers in eine erste Ventilkammer und eine zweite Ventilkammer unterteilt, um einen Fluss eines Fluides zwischen der ersten Ventilkammer und der zweiten Ventilkammer abhängig von der Stellung des Ventilkörpers zu unterbinden.

Die Dichtung weist dabei einen ventilgehäuseseitigen, elastisch verformbaren Verankerungsabschnitt zum Einstecken in eine nutförmige Ventilgehäuseaussparung und zur dynamisch dichtenden Anlage gegen die Ventilgehäuseaussparung auf sowie einen ventilkörperseitigen Abschnitt zur statisch dichtenden Anlage gegen den Ventilkörper.

Dynamisch dichtwirkend bedeutet dabei, dass je nach sich im Fluidventil einstellenden fluidischen bzw. hydraulischen Druckbedingungen eine Relativbewegung zwischen dem abdichtenden Verankerungsabschnitt und der Ventilgehäuseaussparung entstehen kann. Statisch dichtwirkend hingegen bedeutet dabei, dass der ventilkörperseitige Abschnitt der Dichtung bei der Abdichtung gegenüber dem Ventilkörper feststeht und somit keine Relativbewegung entsteht.

Der Verankerungsabschnitt der Dichtung kann dabei z.B. zwei federartige Verankerungselemente umfassen, welche zueinander elastisch beabstandbar sind und eine sich in einer Längsrichtung der Dichtung erstreckende Nut bilden. Diese beiden elastisch verformbaren Verankerungselemente verleihen der Dichtung eine für das Zusammenwirken mit der Ventilgehäuseaussparung notwendige Elastizität bzw. Verformbarkeit. Die beiden Verankerungselemente weisen ferner im Bereich ihrer Anlage gegen die Ventilgehäuseaussparung jeweils eine ventilgehäuseseitige, konvexe Auswölbung auf, die als solche linienartig und/oder flächenartig dichtend mit der Ventilgehäuseaussparung zusammenwirkt.

Der ventilkörperseitige Abschnitt der Dichtung hingegen ist flanschartig ausgebildet, wobei der Flansch ventilkörperseitig korrespondierend zur jeweiligen Kontur des stellbaren Ventilkörpers ausgeformt ist. Der Ventilkörper kann dabei z.B. zylinderförmig und/oder kugelförmig ausgebildet sein. Grundsätzlich ist die Kontur des Ventilkörpers beliebig gestaltbar. Der Flansch kann ferner gleichschenklig, mit parallelen Innenflächen, mit geneigten Innenflächen und/oder mit gerundeten Kanten und Übergängen ausgebildet sein.

Die Dichtung kann z.B. ein- oder mehrteilig ausgebildet sein. Im letzteren Fall sind zwei benachbarte Dichtungsabschnitte über ein Verbindungstück miteinander verbunden.

Die Dichtungsanordnung umfasst:
- ein Ventilgehäuse eines Fluidventils
- einen stellbaren Ventilkörper innerhalb des Ventilgehäuses sowie
- eine Dichtung der zuvor beschriebenen Art,
wobei die Dichtung zwischen dem Ventilgehäuse und dem Ventilkörper angeordnet ist und eine durch das Ventilgehäuse und den Ventilkörper gebildete Ventilkammer zwischen zwei benachbarten Anschlüssen des Fluidventils und abhängig von einer Stellung des Ventilkörpers in eine erste Ventilkammer und eine zweite Ventilkammer unterteilt, um einen Fluss eines Fluides zwischen der ersten Ventilkammer und der zweiten Ventilkammer abhängig von der Stellung des Ventilkörpers zu unterbinden.

Das vorgeschlagene Mehrwege-Fluidventil umfasst die zuvor beschriebene Dichtungsanordnung. Durch die Dichtung lässt sich dabei vorteilhafterweise abhängig von einer Stellung des Ventilkörpers einerseits ein gewünschter Fluss eines Fluides zwischen den Anschlüssen des Fluidventils herstellen und andererseits ein Fluss des Fluides zwischen der ersten Ventilkammer und der zweiten Ventilkammer unterbunden. Das Mehrwege-Fluidventil kann dabei als Mischventil und/oder Verteilerventil fungieren.

Das Fluidventil kann als Kühlwasserventil, insbesondere eines Fahrzeugs verwendet werden.

Im Weiteren wird die Erfindung unter Bezugnahme auf Figurendarstellungen im Einzelnen erläutert. Aus den Unteransprüchen und der nachfolgend detaillierten Beschreibung von vorgeschlagenen Ausführungsformen ergeben sich weitere vorteilhafte Weiterbildungen der Erfindung. Hierzu zeigen:
- Fig.1: ein Beispiel für ein Mehrwege-Fluidventil in einer perspektivischen Ansicht,
- Fig.2: das in Fig.1 gezeigte Mehrwege-Fluidventil in einer ersten Schnittdarstellung,
- Fig.3: das in Fig.1 gezeigte Mehrwege-Fluidventil in einer zweiten Schnittdarstellung,
- Fig.4: das in Fig.1 gezeigte Mehrwege-Fluidventil in einer dritten Schnittdarstellung,
- Fig.5: die in Fig.4 gezeigte Schnittdarstellung in einer perspektivischen Ansicht,
- Fig.6: ein erstes Dichtungsteil in einer perspektivischen Ansicht,
- Fig.7a: eine Verbindung zweier benachbarter Dichtungsabschnitte mittels eines Verbindungstücks in einer perspektivischen Ansicht,
- Fig.7b: eine vergrößerte Darstellung des in Fig.7a gezeigten oberen Dichtungsabschnitts und des Verbindungstücks,
- Fig.7c: eine vergrößerte Darstellung des in Fig.7b gezeigten Dichtungsabschnitts ohne das Verbindungstück,
- Fig.7d: einen Abschnitt des in Fig. 6 gezeigten Dichtungsteils .
- Fig.8: eine Schnittdarstellung einer Dichtungsanordnung mit der in Fig.7a gezeigten Verbindungsanordnung,
- Fig.9: eine weitere Schnittdarstellung der in Fig. 8 gezeigten Dichtungsanordnung sowie
- Fig.10: eine Schnittdarstellung einer alternativen Dichtungsanordnung.

Gleiche oder gleichwirkende Merkmale sind über alle Figuren hinweg mit denselben Bezugszeichen gekennzeichnet.

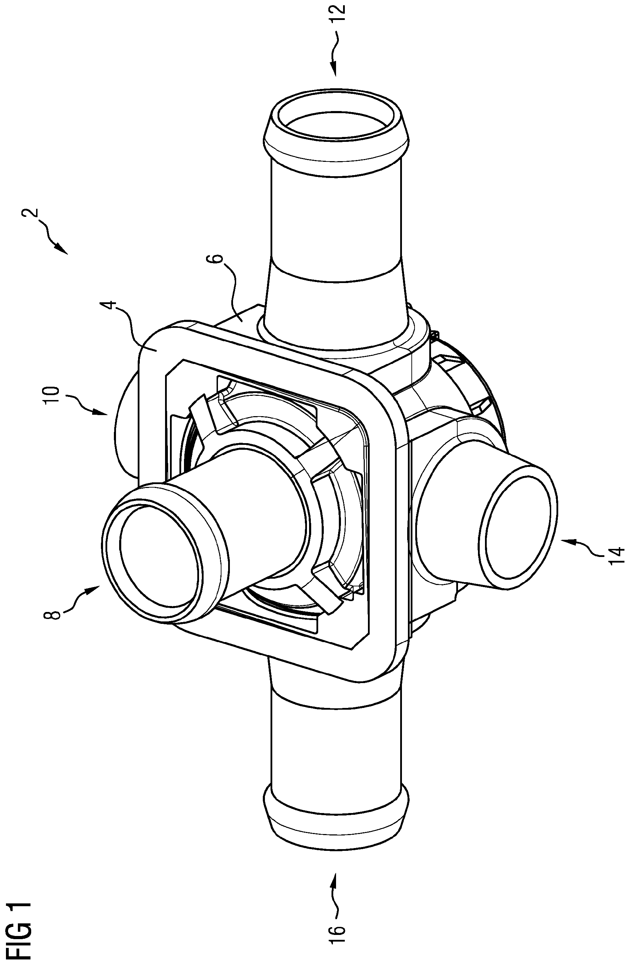

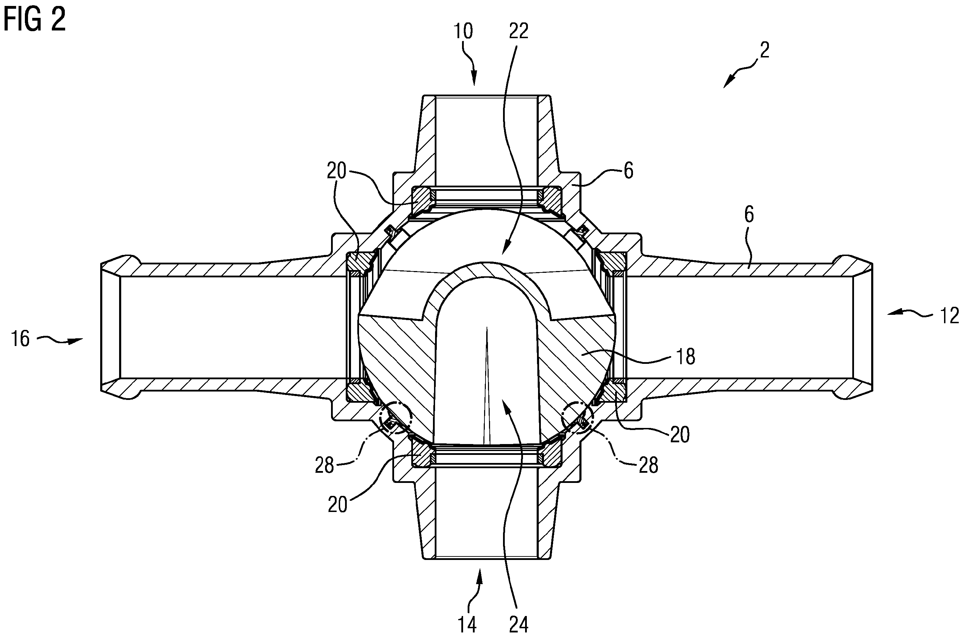

Fig.1 veranschaulicht ein Mehrwege-Kühlwasserventil 2 - auch Kühlwassersteuerventil oder Kühlwasserregelventil genannt - zur Verwendung in einer Kühlwasserventileinheit - auch Kühlwassersteuerventileinheit genannt -, die als solche zur Verwendung in einem Kühlwasserkreislauf eines Fahrzeugs vorgesehen ist. Die Kühlwasserventileinheit umfasst dabei neben dem Mehrwege-Kühlwasserventil 2 auch eine - hier nicht dargestellte - Aktuatoreinheit zur Steuerung eines zwischen dem Ventilgehäuse 4 und dem Ventilgehäusedeckel 6 angeordneten, verschwenkbar stellbaren Ventilkörpers 18 (siehe dazu z.B. Fig.2), über welchen ein gewünschter Kühlwasserfluss zwischen den einzelnen Anschlüssen 8, 10, 12, 14, 16 einstellbar ist. Das Mehrwege-Kühlwasserventil 2 kann dabei z.B. als Mischventil und/oder Verteilerventil fungieren.

Fig.2 veranschaulicht eine erste Stellung des Ventilkörpers 18, in welcher einerseits ein erster Kühlwasserfluss zwischen den Anschlüssen 10, 12, 16 und über einen Durchlass 22 im abschnittsweise kugelförmig ausgebildeten Ventilkörper 18 ermöglicht wird, und andererseits ein zweiter Kühlwasserfluss zwischen den Anschlüssen 8, 14 und über einen weiteren Durchlass 24 des Ventilkörpers 18. Zwischen den Anschlüssen 10, 12, 14, 16 und dem Ventilkörper 18 ist jeweils eine Dichtung 20 vorgesehen, die abhängig von einer Schließstellung des Ventilkörpers 18, in welcher der jeweilige Anschluss 10, 12, 14, 16 zu schließen und abzudichten ist, einerseits gegenüber dem Ventilkörper 18 statisch dichtend wirkt und andererseits gegenüber dem Ventilgehäuse 4 dynamisch dichtend wirkt. Die eingangs beschriebene Unterscheidung zwischen einer dynamischen und statischen Dichtwirkung ist dabei analog anzuwenden. Der Vollständigkeit halber sei an dieser Stelle angemerkt, dass sich der Ventilkörper 18 in keiner der Figurendarstellungen in Bezug auf irgendeine der Dichtungen 20 in einer Schließstellung befindet. Folglich ist keiner dieser Anschlüsse 10, 12, 14, 16 vollständig geschlossen und somit abgedichtet dargestellt.

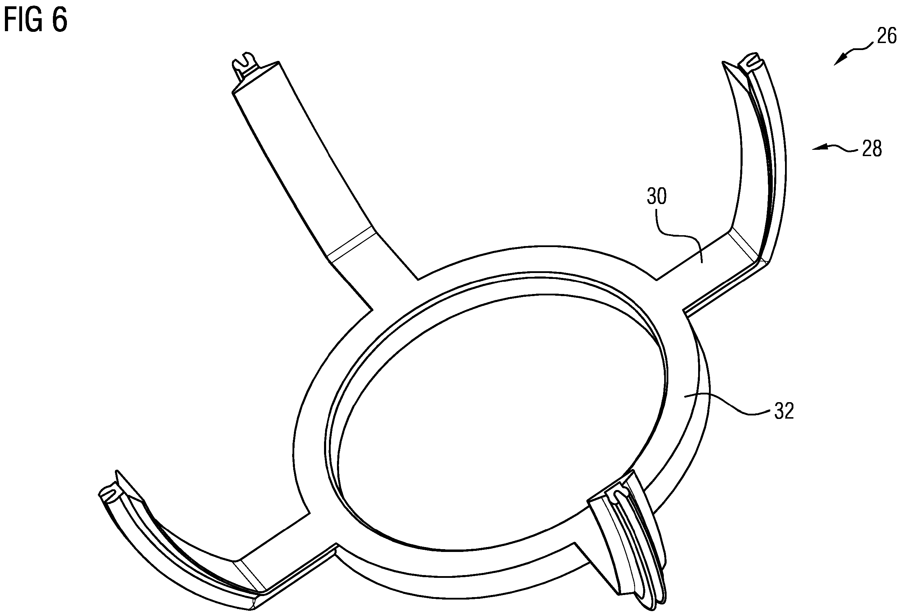

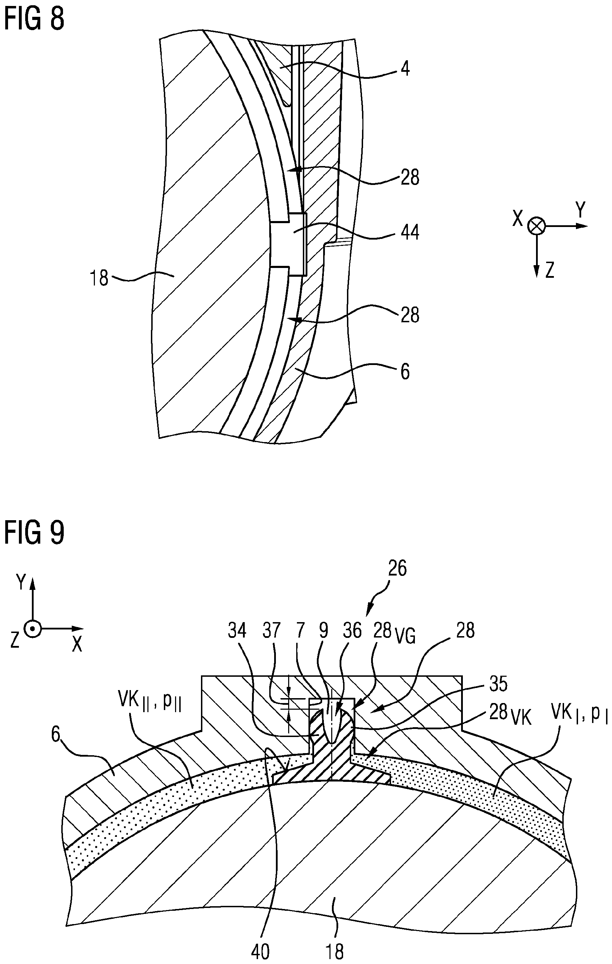

In der Fig.2 befindet sich der Ventilkörper 18 aber in Bezug auf die beiden unteren Dichtungsabschnitte 28 einer weiteren Dichtung 26 (vgl. dazu Fig.6) - welche zur Unterteilung einer Ventilkammer, die durch das Ventilgehäuse 6 und den Ventilkörper 18 gebildet wird, zwischen zwei benachbarten Anschlüssen 12, 14, 16 vorgesehen ist - in einer aktivierenden bzw. schließenden Stellung, in welcher der Ventilkörper 18 mit den beiden Dichtungsabschnitten 28 zusammenwirkt und dabei die Ventilkammer zwischen den benachbarten Anschlüssen 12, 14 einerseits und den benachbarten Anschlüssen 14, 16 andererseits in eine erste Ventilkammer VK_{I} und eine zweite Ventilkammer VK_{II} unterteilt (vgl. dazu auch Fig.9). In dieser ersten Stellung des Ventilkörpers 18 kommt der zuvor beschriebene erste Kühlwasserfluss zwischen den Anschlüssen 10, 12, 16 und über den Durchlass 22 einerseits und der zweite Kühlwasserfluss zwischen den Anschlüssen 8, 14 und über den Durchlass 24 andererseits zustande, ohne dass sich die beiden Kühlwasserflüsse miteinander vermengen. Der Kühlwasserfluss zwischen diesen beiden Ventilkammern VK_{I}, VK_{II} ist vielmehr durch eine Aktivierung der jeweiligen Dichtungsabschnitte 28 infolge des Zusammenwirkens mit dem Ventilkörper 18 wunschgemäß gänzlich unterbunden.

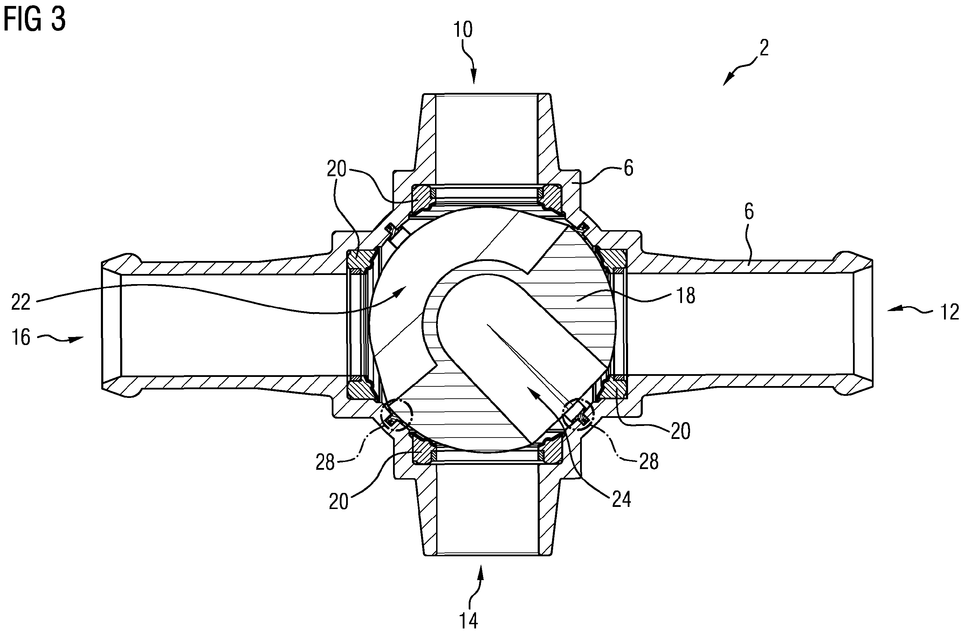

In der Fig.3 befindet sich der Ventilkörper 18 in Bezug auf den rechten oberen und den linken unteren Dichtungsabschnitt 28 in einer aktivierenden bzw. schließenden Stellung, in welcher einerseits ein erster Kühlwasserfluss zwischen den Anschlüssen 10, 16 und über den Durchlass 22 und andererseits ein zweiter Kühlwasserfluss zwischen den Anschlüssen 8, 12, 14 und über den Durchlass 24 wunschgemäß zustande kommt.

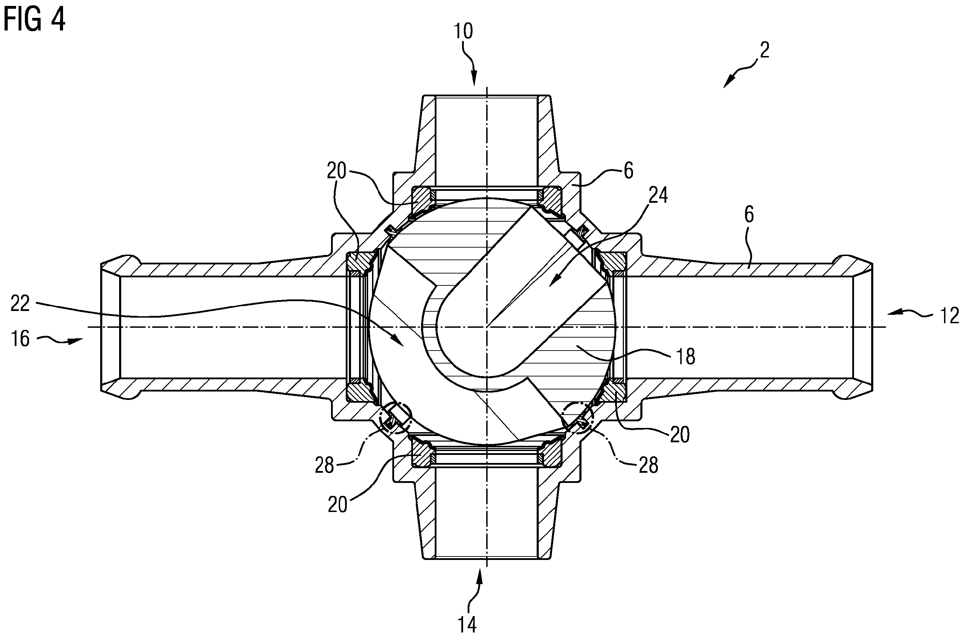

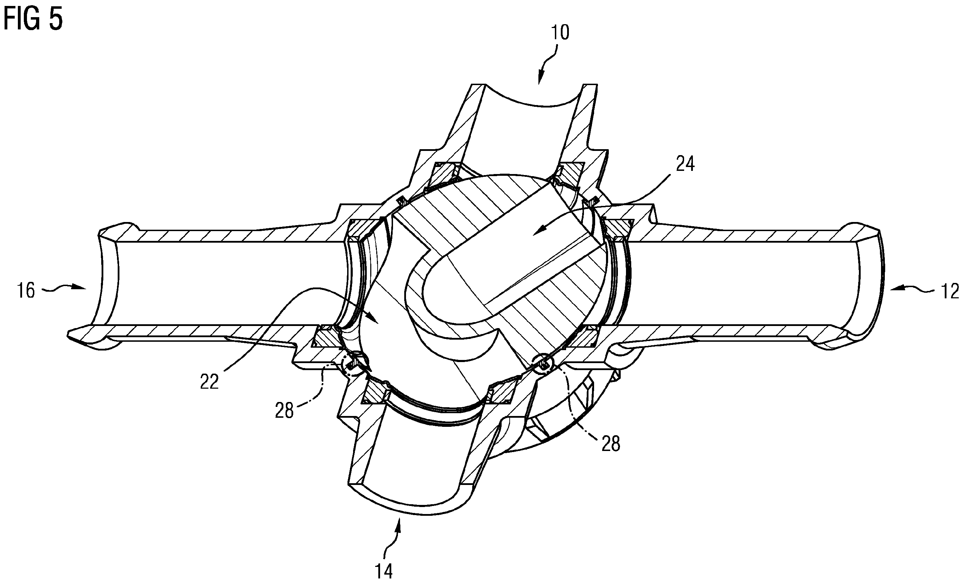

In der Fig.4 und Fig.5 befindet sich der Ventilkörper 18 in einer gegenüber der Fig.3 um 90° gegen den Uhrzeigersinn verschwenkten Stellung. Dabei befindet sich der Ventilkörper 18 in Bezug auf den linken oberen und den rechten unteren Dichtungsabschnitt 28 in einer aktivierenden bzw. schließenden Stellung, in welcher einerseits ein erster Kühlwasserfluss zwischen den Anschlüssen 14, 16 und über den Durchlass 22 und andererseits ein zweiter Kühlwasserfluss zwischen den Anschlüssen 8, 10, 12 und über den Durchlass 24 wunschgemäß zustande kommt.

Fig.6 veranschaulicht einen ersten Teil einer mehrteiligen Dichtung 26, der als solcher vier einzelne Dichtungsabschnitte 28 aufweist. Diese Dichtungsabschnitte 28 sind dabei über je einen Stegabschnitt 30 an einem kreisringförmigen Verbindungsabschnitt 32 angeformt. Die Dichtungsabschnitte 28, die Stegabschnitte 30 sowie der Verbindungsabschnitt 32 bilden dabei ein einstückiges bzw. einteiliges Dichtungsteil, welches aus einem Kunststoff gespritzt ist.

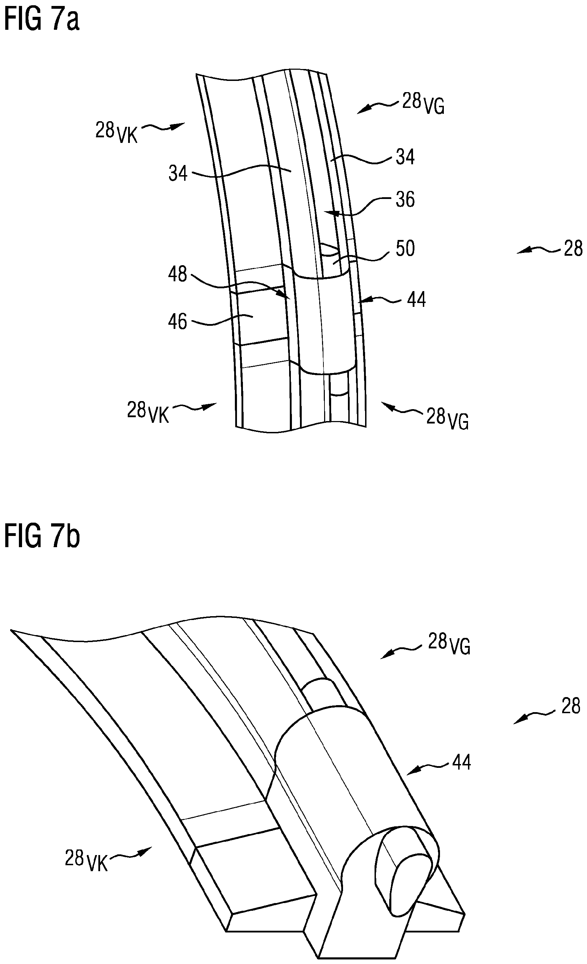

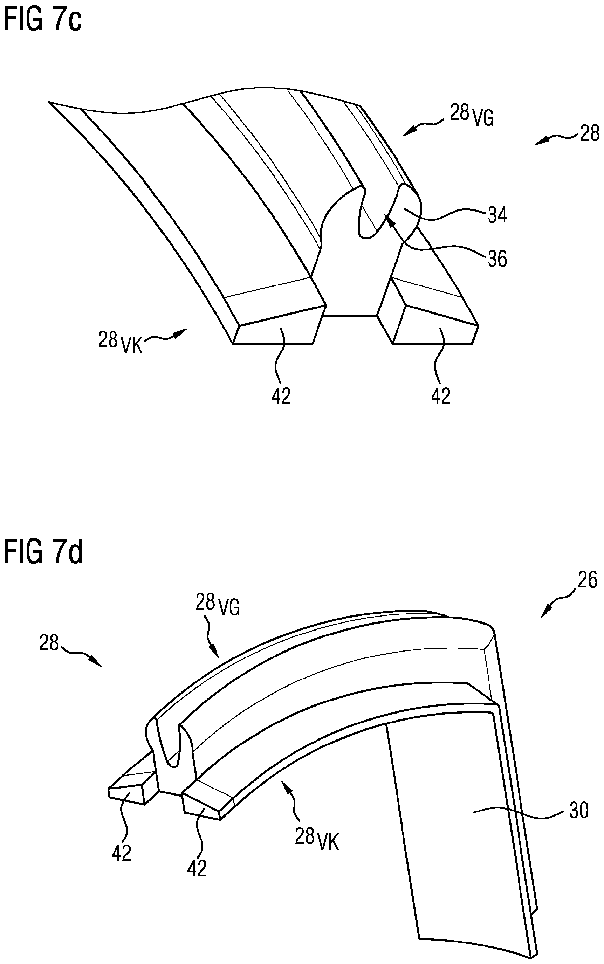

Zur Dichtung 26 gehört weiterhin ein - wenn auch nur teilweise in Fig.7 dargestellter -, zweiter Teil. Der erste und zweite Teil der Dichtung 26 sind dabei z.B. als Gleichteile ausgebildet. Grundsätzlich muss es sich dabei aber nicht um Gleichteile handeln. Auch ist die gezeigte Ausbildung des ersten und zweiten Dichtungsteils (vgl. Fig.6 & Fig.7) nur beispielhaft zu verstehen. Die räumliche Erstreckung der Dichtung 26 kann je nach Anwendungsfall unterschiedlich ausfallen. Somit eröffnet sich für einen Fachmann ein entsprechend großer Spielraum bei der räumlichen Ausgestaltung einer solchen Dichtung.

Der erste und zweite Teil der Dichtung 26 sind dabei an den freien Enden ihrer jeweiligen Dichtungsabschnitte 28 über je ein Verbindungsstück 44 miteinander verbunden (vgl. Fig.7).

Fig.7 umfasst die Fig.7a, Fig.7b, Fig.7c und Fig.7d. In Fig.7a sind zwei benachbarte Dichtungsabschnitte 28 gezeigt, die mittels des Verbindungsstücks 44 miteinander verbunden sind. Die beiden Dichtungsabschnitte 28 umfassen dabei ventilgehäuseseitig jeweils einen elastisch verformbaren Verankerungsabschnitt 28_{VG} in Gestalt zweier federartiger Verankerungselemente 34, welche zueinander elastisch beabstandbar bzw. verformbar sind und eine sich in einer Längsrichtung des jeweiligen Dichtungsabschnitts 28 erstreckende Nut 36 bilden. Das Verbindungsstück 44 schließt sich dabei formschlüssig und bündig an die Formgebung der beiden Dichtungsabschnitte 28 an. In der besagten Längsrichtung ist an den beiden Enden des Verbindungsstücks 44 jeweils ein Zapfen 50 angeformt, der sich in die jeweils zugeordnete Nut 36 erstreckt. Der Dichtungsabschnitt 28 weist ventilkörperseitig einen flanschartig ausgebildeten Abschnitt 28_{VK} auf, welcher korrespondierend zur abschnittsweise kugelförmigen Kontur des Ventilkörpers 18 ausgeformt ist. Grundsätzlich kann der Ventilkörper z.B. zylinderförmig und/oder kugelförmig ausgebildet sein. In Fig.7c ist ferner zu erkennen, dass der mittlere Bereich des zu fügenden Endes 38 des Dichtungsabschnitts 28 gegenüber den beiden flankierenden Flanschabschnitten 42 geringfügig zurückgesetzt ist. Das

Verbindungsstück 44 hingegen ist in der besagten Längsrichtung an seinen beiden Enden entsprechend komplementär zum jeweiligen Ende 38 ausgebildet, um sich - wie zuvor beschrieben - entsprechend formschlüssig und bündig an die Formgebung des jeweiligen Dichtungsabschnitts 28 anzuschließen. Dabei sind die beiden flankierenden Flanschabschnitte 46 gegenüber dem mittleren Bereich 48 des Verbindungsstücks 44 geringfügig zurückgesetzt.

Alternativ zur Darstellung in Fig.7 könnten die einzelnen Verbindungsstücke 44 auch einstückig bzw. einteilig miteinander ausgeformt sein. Dazu stelle man sich die Flanschabschnitte 46 entsprechend verlängert bzw. umlaufend vor, d.h. sich von Verbindungsstück 44 zu Verbindungstück 44 erstreckend.

Die Dichtungsanordnung nach Fig.8 zeigt das Ventilgehäuse 6 nebst dem Ventilgehäusedeckel 4 und den dazwischen angeordneten Ventilkörper 18. Zwischen dem Ventilgehäuse 6 und dem Ventilkörper 18 befinden sich zwei benachbarte Dichtungsabschnitte 28, die über das Verbindungsstück 44 miteinander verbunden sind. Der Ventilkörper 18 befindet sich dabei in einer aktivierenden bzw. schließenden Stellung, in welcher er mit den beiden Dichtungsabschnitten 28 und dem Verbindungsstück 44 zusammenwirkt und dabei die durch das Ventilgehäuse 6 und den Ventilkörper 18 gebildete Ventilkammer zwischen zwei benachbarten Anschlüssen 10, 12, 14, 16 des Fluidventils 2, entsprechend der vorhergehenden Beschreibung, in eine erste Ventilkammer VK_{I} und eine zweite Ventilkammer VK_{II} unterteilt (vgl. dazu auch Fig.9).

Die zwei federartigen Verankerungselemente 34 sind in eine nutförmige Ventilgehäuseaussparung 7 klemmend eingesteckt und dabei elastisch verformt. Im Bereich ihrer Anlage gegen die Ventilgehäuseaussparung 7 weisen diese beiden Verankerungselemente 34 jeweils eine ventilgehäuseseitige, konvexe Ausbauchung bzw. konvexe Auswölbung 35 auf, über welche eine Klemmkraft erzeugt wird und welche als solche linienartig und/oder flächenartig und dabei dynamisch dichtend mit der Ventilgehäuseaussparung 7 zusammenwirkt. In der Längsrichtung Y - Y bzw. in einer bezüglich des kugelförmigen Ventilkörperabschnitts 18 radialen Richtung Y - Y sind die beiden Verankerungselemente 34 gegenüber der Ventilgehäuseaussparung 7 hinreichend beabstandet (vgl. Fig.9, Abstand 37) und bilden mit der Ventilgehäuseaussparung 7 einen Zwischenraum 9 (vgl. Fig.9) . Je nach den sich in den beiden Ventilkammern VK_{I}, VK_{II} darstellenden Druckbedingungen bzw. Druckverhältnissen p_{I}, p_{II}, kann ein unter Druck stehendes Kühlwasser, welches in diesen Zwischenraum 9 eindringt, einer Bewegung des Dichtungsabschnitts 28 in der radialer Richtung Y - Y vorteilhafterweise entgegenwirken und dabei zugleich die linienartige und/oder flächenartige, statisch dichtende Anlage des flanschartigen Abschnitts 28_{VK} gegen den Ventilkörper 18 unterstützen. D.h., dass das Kühlwasser zudem vorteilhafterweise kraftverstärkend in Bezug auf die Klemmkraft zwischen der jeweiligen Auswölbung 35 und der Ventilgehäuseaussparung 7 wirken kann. Der Flanschabschnitt 28_{VK} ist dabei z.B. gleichschenklig und mit geneigten Innenflächen 40 ausgebildet. Alternativ dazu ließe sich der Flanschabschnitt 28_{VK} auch mit parallelen Innenflächen ausbilden.

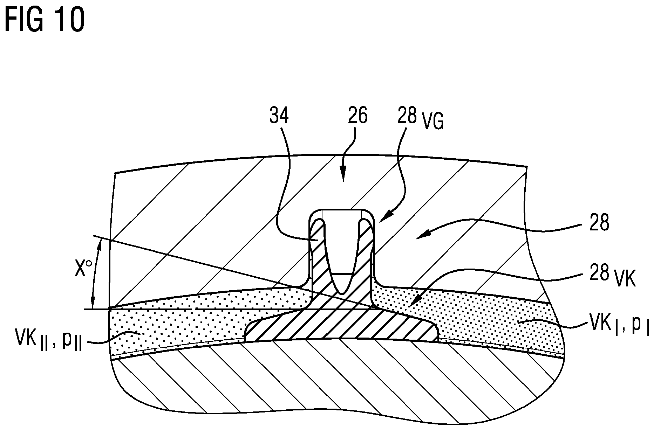

In Fig.10 ist eine alternative Ausgestaltung in Bezug auf den Dichtungsabschnitt 28 zu sehen, bei der die beiden federartigen Verankerungselemente 34 im Vergleich zur Fig.9 schmaler ausgestaltet sind. Die Verankerungselemente 34 weisen dabei im Bereich ihrer beiden oberen Enden jeweils eine gehäuseseitige, konvexe Auswölbung 35 auf. Der Flanschabschnitt 28_{VK} ist dabei ebenfalls gleichschenklig und mit geneigten Innenflächen 40 ausgebildet (vgl. Neigungswinkel X°). Gegenüber der Fig.9 weist diese Ausgestaltung allerdings gerundete Kanten und Übergänge auf.

Bei genauerer Betrachtung ist in den Figuren 9 und 10 eine geringfügige Überschneidung zwischen den jeweiligen Auswölbungen 35 und der jeweiligen Ventilgehäuseaussparung 7 zu erkennen. Dies ist eine bewusst dargestellte Überzeichnung, die als solche durch eine entsprechend elastische Verformung der jeweiligen Verankerungselemente 34 auszugleichen ist. Die resultierende elastische Verformung muss sich der Leser dabei vorstellen.

Allen vorhergehenden Ausführungen zur Dichtung 26 ist gemein, dass das erste und zweite Dichtungsteil vorzugsweise aus einem Hart-Kunststoff gespritzt sein können. Unter einem Hart-Kunststoff kann dabei ein Kunststoff verstanden werden, der als solcher an der jeweils dichtenden Kontaktstelle linienartig und/oder flächenartig dichtwirkend ist und der sich beim Zusammenwirken mit dem Ventilkörper 18 elastisch nicht oder zumindest so gut wie nicht elastisch verformen lässt. Ein solcher Kunststoff ist z.B. PTFE (PTFE steht dabei für Polytetrafluorethylen) und dergleichen mehr.

Die Verbindungsstücke 44 hingegen können aus einem weicheren Kunststoff - etwa aus einem EPDM-Kunststoff (EPDM steht dabei für Ethylen-Propylen-Dien) und dergleichen mehr - gespritzt sein, der sich als solcher beim Zusammenwirken mit dem Ventilkörper 18 elastisch verformen lässt. In Verbindung mit den zuvor genannten Hart-Kunststoff-Dichtungsteilen fungiert ein solches Verbindungsstück 44 zudem als Ausgleichselement.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

## Patentansprüche

1. Mehrwege-Fluidventil, aufweisend
• ein Ventilgehäuse (6),
• einen stellbaren Ventilkörper (18) innerhalb des Ventilgehäuses (6), und
• eine Dichtung (26, 28), wobei
die Dichtung (26, 28) zwischen dem Ventilgehäuse (6) und dem Ventilkörper (18) angeordnet ist und eine durch das Ventilgehäuse (6) und den Ventilkörper (18) gebildete Ventilkammer zwischen zwei benachbarten Anschlüssen (10, 12, 14, 16) des Fluidventils (2) und abhängig von einer Stellung des Ventilkörpers (18) in eine erste Ventilkammer (VK_{I}) und eine zweite Ventilkammer (VK_{II}) unterteilt, um einen Fluss eines Fluides zwischen der ersten Ventilkammer (VK_{I}) und der zweiten Ventilkammer (VK_{II}) abhängig von der Stellung des Ventilkörpers (18) zu unterbinden,
die Dichtung (26, 28) einen ventilgehäuseseitigen, elastisch verformbaren Verankerungsabschnitt (28_{VG}), der in eine nutförmige Ventilgehäuseaussparung (7) eingesteckt ist, zur dynamisch dichtenden Anlage gegen die Ventilgehäuseaussparung (7) aufweist sowie einen ventilkörperseitigen Abschnitt (28_{VK}) zur statisch dichtenden Anlage gegen den Ventilkörper (18),
durch die Dichtung (26, 28) abhängig von einer Stellung des Ventilkörpers (18) einerseits ein gewünschter Fluss eines Fluides zwischen den Anschlüssen (10, 12, 14, 16) des Mehrwege-Fluidventils (2) hergestellt ist und andererseits ein Fluss des Fluides zwischen der ersten Ventilkammer (VK_{I}) und der zweiten Ventilkammer (VK_{II}) unterbunden ist, **dadurch gekennzeichnet, dass**
der Ventilkörper (18) kugelförmig oder zylinderförmig ausgebildet ist, und dass er verschwenkbar stellbar ist.

2. Mehrwege-Fluidventil nach Anspruch 1, wobei der Verankerungsabschnitt (28_{VG}) zwei federartige Verankerungselemente (34) umfasst, welche zueinander elastisch beabstandbar sind und eine sich in einer Längsrichtung (Z - Z) der Dichtung (26, 28) erstreckende Nut (36) bilden.

3. Mehrwege-Fluidventil nach Anspruch 1 oder 2, wobei die beiden Verankerungselemente (34) im Bereich ihrer Anlage gegen die Ventilgehäuseaussparung (7) jeweils eine ventilgehäuseseitige, konvexe Auswölbung (35) aufweisen.

4. Mehrwege-Fluidventil nach einem der Ansprüche 1 bis 3, wobei der ventilkörperseitige Abschnitt (28_{VK}) flanschartig ausgebildet ist, wobei der Flansch ventilkörperseitig korrespondierend zur jeweiligen Kontur des Ventilkörpers (18) ausgeformt ist.

5. Mehrwege-Fluidventil nach Anspruch 4, wobei der Flansch gleichschenklig ausgebildet ist.

6. Mehrwege-Fluidventil nach Anspruch 4 oder 5, wobei der Flansch mit parallelen Innenflächen (40) ausgebildet ist.

7. Mehrwege-Fluidventil nach Anspruch 4, 5 oder 6, wobei der Flansch mit geneigten Innenflächen (40) ausgebildet ist.

8. Mehrwege-Fluidventil nach einem der Ansprüche 4 bis 7, wobei der Flansch mit gerundeten Kanten und Übergängen ausgebildet ist.

9. Mehrwege-Fluidventil nach einem der vorhergehenden Ansprüche, wobei die Dichtung (26, 28) einteilig oder mehrteilig ausgebildet ist.

10. Mehrwege-Fluidventil nach Anspruch 9, wobei zwei benachbarte Dichtungsabschnitte (28) über ein Verbindungstück (44) miteinander verbunden sind.

11. Verwendung des Mehrwege-Fluidventils (2) nach einem der Ansprüche 1 bis 10 als Kühlwasserventil, insbesondere eines Fahrzeugs.

## Claims

1. Multi-directional fluid valve comprising
• a valve housing (6),
• an adjustable valve body (18) within the valve housing (6), and
• a seal (26, 28), wherein
the seal (26, 28) is arranged between the valve housing (6) and the valve body (18) and, between two adjacent connections (10, 12, 14, 16) of the fluid valve (2) and in dependence on a position of the valve body (18), divides a valve chamber which is formed by the valve housing (6) and the valve body (18) into a first valve chamber (VK_{I}) and a second valve chamber (VK_{II}), in order to prevent a flow of a fluid between the first valve chamber (VK_{I}) and the second valve chamber (VK_{II}) in dependence on the position of the valve body (18),
the seal (26, 28) has a valve-housing-side, elastically deformable anchoring portion (28_{VG}), which is plugged into a groove-like valve housing cutout (7), for dynamically sealing abutment against the valve housing cutout (7), and also a valve-body-side portion (28_{VK}) for statically sealing abutment against the valve body (18),
in dependence on a position of the valve body (18), the seal (26, 28) is used, on the one hand, to produce a desired flow of a fluid between the connections (10, 12, 14, 16) of the multi-directional fluid valve (2) and, on the other hand, to prevent a flow of the fluid between the first valve chamber (VK_{I}) and the second valve chamber (VK_{II}), **characterized in that**
the valve body (18) is of spherical or cylindrical form, and **in that** said valve body is adjustable in a pivotable manner.

2. Multi-directional fluid valve according to Claim 1, wherein the anchoring portion (28_{VG}) comprises two spring-like anchoring elements (34) which can be elastically spaced apart from one another and which form a groove (36) which extends in a longitudinal direction (Z - Z) of the seal (26, 28).

3. Multi-directional fluid valve according to Claim 1 or 2, wherein the two anchoring elements (34) each have, in the region of their abutment against the valve housing cutout (7), a valve-housing-side, convex bulge (35).

4. Multi-directional fluid valve according to one of Claims 1 to 3, wherein the valve-body-side portion (28_{VK}) is of flange-like form, wherein the flange is shaped on the valve body side so as to correspond to the respective contour of the valve body (18).

5. Multi-directional fluid valve according to Claim 4, wherein the flange is of isosceles form.

6. Multi-directional fluid valve according to Claim 4 or 5, wherein the flange is formed with parallel inner faces (40).

7. Multi-directional fluid valve according to Claim 4, 5 or 6, wherein the flange is formed with inclined inner faces (40).

8. Multi-directional fluid valve according to one of Claims 4 to 7, wherein the flange is formed with rounded edges and transitions.

9. Multi-directional fluid valve according to one of the preceding claims, wherein the seal (26, 28) is of one-part or multi-part form.

10. Multi-directional fluid valve according to Claim 9, wherein two adjacent seal portions (28) are connected to one another by way of a connecting piece (44).

11. Use of the multi-directional fluid valve (2) according to one of Claims 1 to 10 as a cooling water valve, in particular of a vehicle.

## Revendications

1. Soupape de fluide à voies multiples, comprenant
- un boîtier de soupape (6),
- un corps de soupape réglable (18) à l'intérieur du boîtier de soupape (6), et
- un joint d'étanchéité (26, 28),
le joint d'étanchéité (26, 28) étant agencé entre le boîtier de soupape (6) et le corps de soupape (18), et divisant une chambre de soupape formée par le boîtier de soupape (6) et le corps de soupape (18), entre deux raccords voisins (10, 12, 14, 16) de la soupape de fluide (2) et en fonction d'une position du corps de soupape (18), en une première chambre de soupape (VK_{I}) et une deuxième chambre de soupape (VK_{II}), afin d'empêcher un écoulement d'un fluide entre la première chambre de soupape (VK_{I}) et la deuxième chambre de soupape (VK_{II}) en fonction de la position du corps de soupape (18),
le joint d'étanchéité (26, 28) présentant une section d'ancrage déformable élastiquement (28_{VG}), du côté du boîtier de soupape, qui est insérée dans un évidement de boîtier de soupape en forme de rainure (7), pour l'appui dynamique étanche contre l'évidement de boîtier de soupape (7), ainsi qu'une section (28_{VK}) du côté du corps de soupape pour l'appui statique étanche contre le corps de soupape (18),
le joint d'étanchéité (26, 28) permettant, en fonction d'une position du corps de soupape (18), d'une part d'établir un écoulement souhaité d'un fluide entre les raccords (10, 12, 14, 16) de la soupape de fluide à voies multiples (2) et, d'autre part, d'empêcher un écoulement du fluide entre la première chambre de soupape (VK_{I}) et la deuxième chambre de soupape (VK_{II}), **caractérisée en ce que**
le corps de soupape (18) est configuré sous forme sphérique ou sous forme cylindrique et **en ce qu'**il est réglable de manière pivotante.

2. Soupape de fluide à voies multiples selon la revendication 1, la section d'ancrage (28_{VG}) comprenant deux éléments d'ancrage (34) de type ressort, qui peuvent être espacés de manière élastique l'un de l'autre et qui forment une rainure (36) s'étendant dans une direction longitudinale (Z-Z) du joint d'étanchéité (26, 28).

3. Soupape de fluide à voies multiples selon la revendication 1 ou 2, les deux éléments d'ancrage (34) présentant chacun, dans la zone de leur appui contre l'évidement de boîtier de soupape (7), un bombement convexe (35) du côté du boîtier de soupape.

4. Soupape de fluide à voies multiples selon l'une quelconque des revendications 1 à 3, la section (28_{VK}) du côté du corps de soupape étant configurée sous forme de bride, la bride étant formée du côté du corps de soupape en correspondance avec le contour respectif du corps de soupape (18).

5. Soupape de fluide à voies multiples selon la revendication 4, la bride étant configurée sous forme isocèle.

6. Soupape de fluide à voies multiples selon la revendication 4 ou 5, la bride étant configurée avec des surfaces intérieures parallèles (40).

7. Soupape de fluide à voies multiples selon la revendication 4, 5 ou 6, la bride étant configurée avec des surfaces intérieures inclinées (40).

8. Soupape de fluide à voies multiples selon l'une quelconque des revendications 4 à 7, la bride étant configurée avec des arêtes et des transitions arrondies.

9. Soupape de fluide à voies multiples selon l'une des revendications précédentes, le joint d'étanchéité (26, 28) étant configuré en une partie ou en plusieurs parties.

10. Soupape de fluide à voies multiples selon la revendication 9, deux sections de joint d'étanchéité (28) voisines étant reliées entre elles par une pièce de liaison (44).

11. Utilisation de la soupape de fluide à voies multiples (2) selon l'une quelconque des revendications 1 à 10 en tant que soupape d'eau de refroidissement, notamment d'un véhicule.
